**Europäisches Patentamt**

**(19) European Patent Office**

**Office européen des brevets**

(11) Publication number : **0 412 506 B1**

(12) **EUROPEAN PATENT SPECIFICATION**

(45) Date of publication of patent specification :
15.12.93 Bulletin 93/50

(51) Int. Cl.⁵ : **F02D 41/40, F02D 41/28**

(21) Application number : **90115167.0**

(22) Date of filing : **07.08.90**

(54) **Fuel injection control apparatus of internal combustion engine.**

(30) Priority : **08.08.89 JP 205399/89**

(43) Date of publication of application :
**13.02.91 Bulletin 91/07**

(45) Publication of the grant of the patent :
**15.12.93 Bulletin 93/50**

(84) Designated Contracting States :
**DE FR GB**

(56) References cited :
**FR-A- 2 301 691**
**JP-A- 1 167 445**
**US-A- 4 561 397**
**US-A- 4 570 594**
**US-A- 4 667 634**
**PATENT ABSTRACTS OF JAPAN vol. 7, no. 95 (M-209) 21 April 1983, & JP-A-58 018528 (TOYO KOGYO K.K.) 03 February 1983**

(73) Proprietor : **TOYOTA JIDOSHA KABUSHIKI KAISHA**
**1, Toyota-cho Toyota-shi**
**Aichi-ken (JP)**

(72) Inventor : **Itoh, Yoshiyasu**
**c/o Toyota Jidosha Kabushiki Kaisha, 1, Toyota-cho**
**Toyota-shi, Aichi-ken (JP)**
Inventor : **Kobayashi, Fumiaki**
**c/o Toyota Jidosha Kabushiki Kaisha, 1, Toyota-cho**
**Toyota-shi, Aichi-ken (JP)**

(74) Representative : **Pellmann, Hans-Bernd, Dipl.-Ing. et al**
**Patentanwaltsbüro Tiedtke-Bühling-Kinne & Partner Bavariaring 4**
**D-80336 München (DE)**

## Description

The present invention relates to a method and an apparatus for a fuel injection control of an internal combustion engine.

In the past, there has been known a diesel engine electronically controlled fuel injection control apparatus in which the basic injection amount was determined by the amount of depression of the accelerator pedal and the engine rotational speed and corrected by various correction coefficients to find the final injection amount, fuel was discharged from a fuel injection pump for an injection time corresponding to the final injection amount, and this discharged fuel was injected from a fuel injector (Japanese unexamined patent publication No. 60-125756).

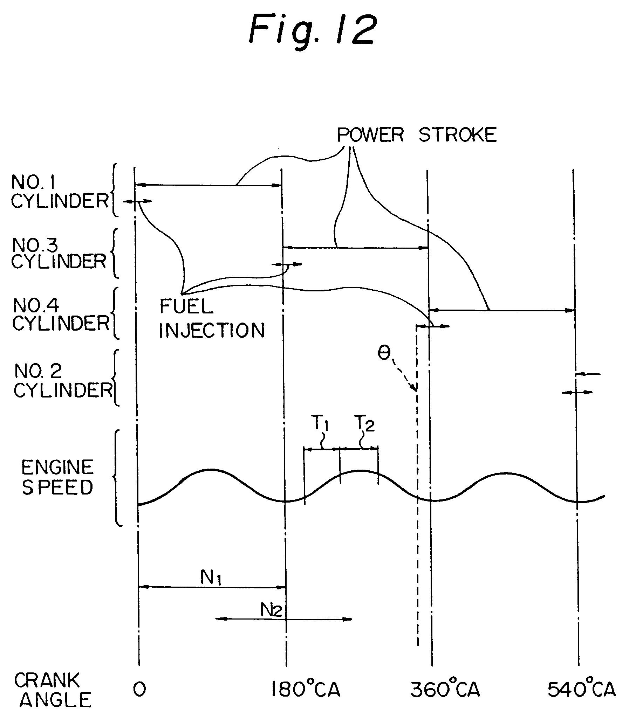

First, an explanation of the method of fuel injection control using this fuel injection control apparatus will be given. Fig. 12 shows the changes in the timing of the power stroke of the cylinders, the fuel injection timing and the engine rotational speed in the case of a 1-3-4-2 injection order. As shown in Fig. 12, the engine rotational speed becomes maximum about 90 after the top dead center (below referred to as TDC) after fuel has been explosively burned and, therefore, the engine rotational speed changes in a cycle of 180 crank angle. Looking at the no. 4 cylinder, for example, however, the fuel injection is started at the crank angle Θ a little before the TDC of the power stroke of the no. 4 cylinder, so that the engine rotational speed for calculating the amount of the fuel injection must be found a little before the crank angle θ. Therefore, in the above-mentioned fuel injection control apparatus, the mean engine rotational speed of the 180 crank angle N1, which is the power stroke of the no. 1 cylinder, is calculated, and based on that mean engine rotational speed, the fuel injection amount for the no. 4 cylinder is calculated. That is, the engine rotational speed in the power stroke two times before the cylinder to which fuel is to be injected is used to calculate the fuel injection amount.

In a transitional engine operating state such as acceleration or deceleration, however, the engine rotational speed rapidly changes, and if in the acceleration state of the example shown in Fig. 12, the engine rotational speed when the no. 3 cylinder is in the power stroke becomes higher than the engine rotational speed when the no. 1 cylinder is in the power stroke and, if in the deceleration state, the engine rotational speed when the no. 3 cylinder is in the power stroke becomes lower than the engine rotational speed when the no. 1 cylinder is in the power stroke. Therefore, the actual engine rotational speed when fuel should be injected to the no. 4 cylinder is close to the engine rotational speed when the no. 3 cylinder is in the power stroke, and, therefore, it would be better if, in terms of the acceleration and deceleration states, the amount of fuel which should be injected to the no. 4 cylinder were found using the engine rotational speed when the no. 3 cylinder is in the power stroke.

In this fuel injection control apparatus, however, the amount of fuel which should be injected to the no. 4 cylinder is calculated based on the mean engine rotational speed when the no. 1 cylinder is in the power stroke, that is, based on the mean engine rotational speed considerably deviated from the actual engine rotational speed when fuel is to be injected to the no. 4 cylinder, so there is the problem that good acceleration and deceleration operating states cannot be obtained.

To resolve this problem, as indicated by a range N2 in Fig. 12, it may be considered to make the range of calculation of the engine rotational speed close to the crank angle Θ, but even if this is done, the engine rotational speed when the no. 1 cylinder is in the power stroke greatly effects the mean engine rotational speed measured during the range N2, so even if the fuel injection amount for the no. 4 cylinder is calculated based on this mean engine rotational speed, it would be difficult to obtain good acceleration and deceleration operating states.

Furthermore, document US-A-4 667 634 discloses a method for controlling the amount of fuel injected into individual cylinders of an electronically controlled diesel engine in order to ensure uniform engine torque troughout all cylinders in idle state by first obtaining correction amounts for correcting the cylinder-to-cylinder scattering of injected fuel amount, and by second modifying these correction amounts by using engine operating conditions to determine the final amounts of fuel to be injected into respective cylinders when the engine is in other than in idle state. Thereby, the correction amounts for correcting the injection amount scattering are calculated from a differential voltage signal derived from the combustion caused rotational speed changes of the crank shaft, this differential voltage signal representing the arithmetic mean value of the crank shaft rotational speed changes measured in a number of preceding power strokes corresponding to the number of cylinders of the engine. The calculated correction amount in the following is made common to all cylinders to improve rotation behaviour of the engine in idle state. In all other engine operation states, however, on the basis of the correction amount determined during idling, when performing a further calculation this correction amount is then modified to the final amount of fuel to be injected by considering a simple correction factor being determined by other engine operation conditions.

Moreover, document US-A-4 561 397 discloses a method for controlling fuel quantities injected in individual engine cylinders of an electronically controlled diesel engine, wherein the final amount of injected fuel is calculated based on a detected variation in rotational speed of the crank shaft in correspondence with every combustion stroke of each engine cylinder. Thus, if the engine is determined to be in a stable idle state, the correction amount of fuel is principally calculated based on a rotational speed deviation, measured within one single stroke, from a mean rotational speed deviation determined for a number of strokes corresponding to the number of cylinders. Consequently, the correction amount of fuel $\Delta Q_p$ individual to one cylinder is based on the rotational speed deviations calculated for every single cylinder and on the arithmetic mean value thereof. Furthermore, the correction amount of fuel $\Delta Q_p$ is newly determined only if, within a four stroke engine cycle in which every cylinder executes a power stroke, there are two or more cylinders in which one specific rotational speed value is the minimum out of all rotational speed values obtained for one cylinder (step 122). However, if the engine is determined not to be in a stable idle state, the final injection amount of fuel is calculated on the basis of the mean engine speed, the accelerator opening and a value obtained by multiplying the individual cylinder correction quantity, which has been determined within a preceding idling state of the engine, and a simple correction factor stored in a fixed table.

The above cited documents disclose the features recited in the first part of the independent claims.

The object of the present invention is to provide a method and an apparatus for a fuel injection control which enable good acceleration and deceleration operating states.

According to the present invention, there is provided a method for a fuel injection control of a multi-cylinder internal combustion engine, wherein a mean value of an engine rotational speed is found and a basic injection amount of fuel is determined based on both said engine load and said mean value of an engine rotational speed, said basic injection amount being corrected by various engine operating parameters, and said mean value of the engine rotational speed being calculated from the engine rotational speed in a range of crank angle shorter than a power stroke of the engine and about a crank angle of the peak engine rotational speed, being characterized in that the rpm information used for the calculation of the basic injection amount of fuel of every cylinder is only the average rpm measured in a range shorter than a power stroke of a cylinder, about a crank angle of the peak engine rpm of that engine cylinder in which the previous injection operation was carried out.

According to the present invention, there is further provided an apparatus for a fuel injection control of a multi-cylinder internal combustion engine, comprising means for finding a mean value of an engine rotational speed, determining means for determining a basic injection amount of fuel based on both said engine load and said mean value of an engine rotational speed, correcting means for correcting said basic injection amount by various engine operating parameters, and calculation means for calculating said mean value of the engine rotational speed from the engine rotational speed in a range of crank angle shorter than a power stroke of the engine and about a crank angle of the peak engine rotational speed, being characterized in that said determining means uses the rpm information for the calculation of the basic injection amount of fuel of every cylinder which is only the average rpm measured in a range shorter than a power stroke of a cylinder, about a crank angle of the peak engine rpm of that engine cylinder in which the previous injection operation was carried out.

The advantages of the present invention will become apparent and obvious to those skilled in the pertinent art upon referring to the following description provided in connection with the accompanying drawings, of which

Fig. 1 is an overview of a fuel injection control apparatus;
Fig. 2 is a view showing a pulser of Fig. 1;
Fig. 3 is a block diagram of an electronic control unit;
Fig. 4 is a view showing the output of a rotational speed sensor;
Fig. 5 is a flow chart of an interruption routine;
Fig. 6 is a flow chart of a main routine;
Fig. 7 is a diagram of a basic injection amount;
Fig. 8 is a flow chart of an interruption routine;
Fig. 9 is a diagram for explaining the timing of injection start;
Fig. 10 is a flow chart for controlling a timer control valve;
Fig. 11 is a diagram showing the target injection start timing etc.; and
Fig. 12 is a graph for explaining the method of detection of the engine rotational speed.

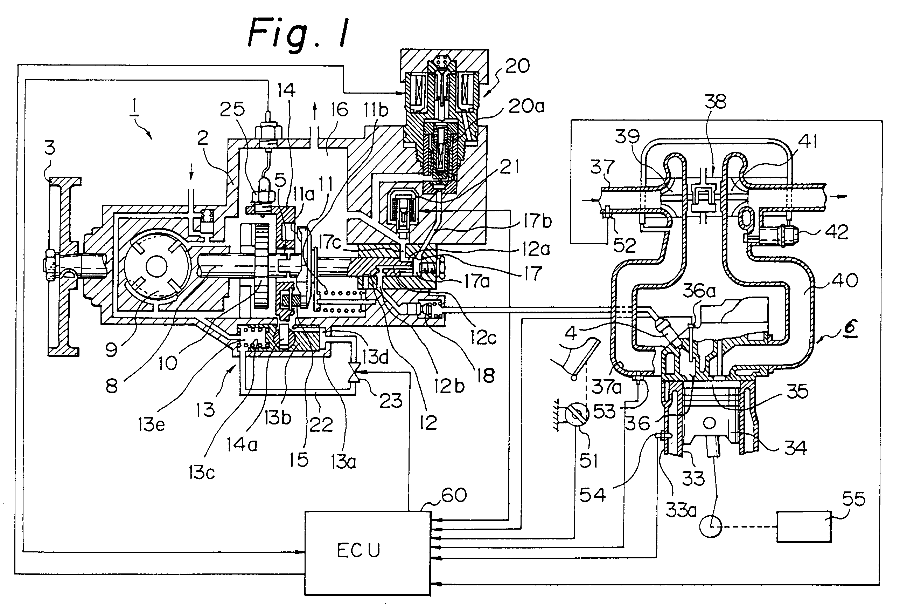

Referring to Fig. 1, reference numeral 1 is a distribution type injection pump, a drive shaft 8 disposed in the housing 2 of that injection pump 1, which protrudes into a fuel chamber 16 of the housing 2 and which is driven to rotate through a pulley 3 by an engine crankshaft (not shown). In the housing 2 is integrally formed a fuel feed pump 9. To facilitate the understanding of the construction of the fuel feed pump 9, Fig. 1 shows the fuel feed pump 9 rotated by 90°. To the drive shaft 8 are fixed a rotor of the fuel feed pump 9, a pulser 10 disposed in the fuel chamber 16, and a coupling 5 for driving a plunger 12.

In the housing 2 is formed a cylinder 17, in which the right end of the plunger 12 is inserted. At the left end of the plunger 12, a disk shaped cam plate 11 forming a cam face 11a and a coupling 5 are fixed. In this way, the plunger 12 and the drive shaft 8 are connected to each other via the coupling 5, so when the drive shaft 8 rotates, the plunger 12 is rotated along with it. Note that the coupling 5 connects the drive shaft 8 and the plunger 12 so that the plunger 12 can move in the axial direction while rotating. In the fuel chamber 16 is disposed a roller ring 14 so as to enclose the coupling 5, being able to rotate around the axis of the plunger 12. The roller ring 14 is provided with a lever 14a, which extends downward, and further the roller ring 14 has mounted to it in a rotatable manner a cam roller 15 which moves on the cam face 11a in contact with the cam face 11a. Under the roller ring 14 is provided a timer apparatus 13 having a timer piston 13b. The bottom end of the lever 14a is engaged with the timer piston 13b. Fig. 1 shows the timer housing 13a rotated by 90°. Therefore, the timer piston 13b can move in the same direction as the rotational movement of the bottom end of the lever 14a. As a result, when the timer piston 13b moves, the roller ring 14 is rotated along with this.

In the timer housing 13a is formed a high pressure chamber 13d and a low pressure chamber 13e separated by the timer piston 13b. The high pressure chamber 13d communicates at all times with the inside of the fuel chamber 16. The low pressure chamber 13e is connected to the intake side of the fuel feed pump 9, while in the low pressure chamber 13e there is inserted a compression spring 13c which biases the timer piston 13b toward the high pressure chamber 13d. The high pressure chamber 13d and the low pressure chamber 13e communicate with each other through a communication passage 22, in which a timer control valve 23 is disposed. This timer control valve 23 is controlled by a control pulse which changes in duty ratio. For example, when the duty ratio of the control pulse becomes larger, the proportion of time where the timer control valve 23 opens becomes larger. If the proportion of time where the timer control valve 23 opens becomes larger, the timer piston 13b moves to the right and as a result the roller ring 11 is rotated.

On the cam face 11a of the cam plate 11 are formed the same number of protrusions, for example, four, as the number of cylinders. The cam face 11a is pressed on the cam roller 15 at all times by the spring force of a return spring 11b. When the drive shaft 8 rotates, the protrusions on the cam face 11a engage with the cam roller 15, at which time the plunger 12 is moved in the axial direction. Therefore, when the drive shaft 8 rotates one time, the plunger 12 moves back and forth four times. At this time, if the roller ring 14 is rotated by the action of the timer piston 13b, the timing at which the protrusions on the cam face 11a and the cam roller 15 engage changes and therefore the fuel injection timing changes. In the embodiment shown in Fig. 1, if the duty ratio of the control pulse supplied to the timer control valve 23 increases and the timer piston 13b moves to the right, the fuel injection timing is advanced.

On the other hand, the plunger 12 is provided with a single fuel discharge hole 12c communicating with the inside of the pressure chamber 17a of the cylinder 17. Further, on the inner circumferential face of the cylinder 17 are formed four fuel outflow holes 12b which can communicate with the fuel discharge hole 12c. These fuel outflow holes 12b are each connected to the fuel injection valves 4 of the corresponding cylinders through check valves 18. When the plunger 12 moves to the left, the fuel in the fuel chamber 16 is supplied to the pressure chamber 17a through fuel supply passages 17c and 12a. Next, when the plunger 12 moves to the right, the fuel in the pressure chamber 17a is compressed. Next, when the fuel discharge hole 12c of the plunger 12 is made communicated with any one of the fuel outflow holes 12b, the high pressure fuel in the pressure chamber 17a is injected from the fuel injector 4. In this way, since the fuel discharge hole 12c of the plunger 12 is successively made communicated with the four fuel outflow holes 12b, fuel is successively injected from the fuel injectors 4 of the cylinders.

On the other hand, in the housing 2 is disposed a fuel spill valve 20 which connects the pressure chamber 17a and the fuel chamber 16. When a needle valve 20a of the fuel spill valve 20 rises, the pressurized fuel in the pressure chamber 17a spills into the fuel chamber 6. This fuel spill valve 20 is opened after the start of injection from the fuel injector 4. When the fuel spill valve 20 opens, the fuel injection is stopped. Therefore, the fuel injection amount may be controlled by the timing at which the fuel spill valve 20 opens. Note that in the fuel supply passage 17c is disposed a fuel shutoff valve 21 which opens only during the fuel intake stroke of the plunger 12.

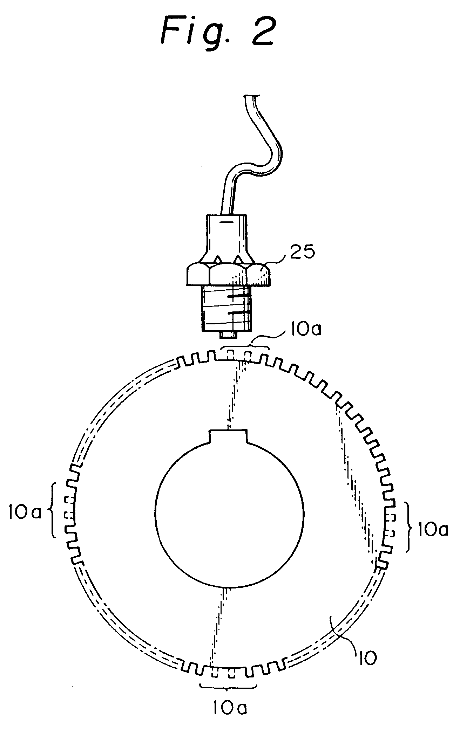

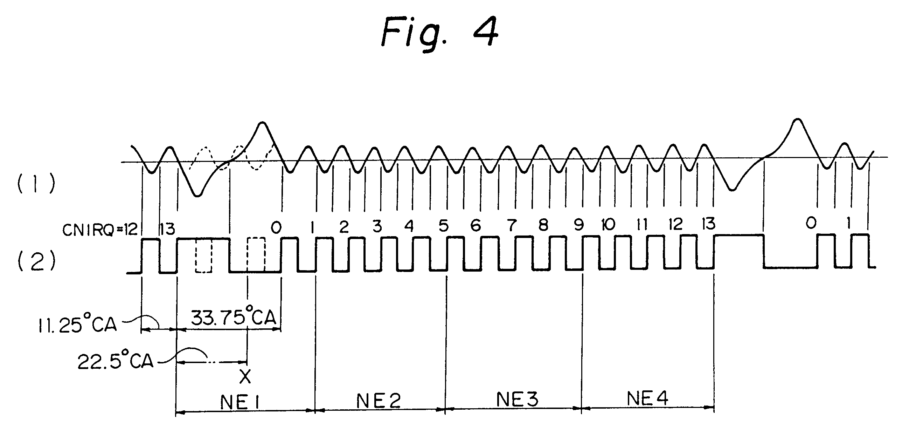

As shown in Fig. 1, on the roller ring 14 is mounted a rotational speed sensor 25 made of, for example, an electromagnetic pickup, facing the outer circumference of the pulser 10. By this rotational speed sensor 25, the rotational speed of the fuel injection pump 1, that is, the rotational speed of the diesel engine 6 is detected. In the embodiment shown in Fig. 1, as shown in Fig. 2, a plurality of teeth are formed on the outer circumferential face with nontooth portions 10a of two tooth spaces each formed every 90° (180° crank angle) from a state of 64 teeth arranged equiangularly. Therefore, when the diesel engine 6 rotates, pulse signals (cam angle signals) are generated by the teeth every 720° CA/64 = 11.25, as shown by the detection waveform in Fig. 4(1), and the detection output after the shaping of the waveform in Fig. 4(2) and also a pulse signal (reference position signal) of 11.25°CA x 3 = 33.75°CA is generated by the nontooth portions 10a after thirteen cam angle signals are generated. That is, on the outer circumferential face of the pulser 10 are formed 56 teeth including four nontooth portions, equal to the number of cylinders of the diesel engine, dividing the circumference equally, so by waveshaping the detection signal from the rotational speed sensor 25, a reference position signal synchronized with the fuel injection period and a rotational signal expressing the rotational speed are obtained. Note that the rotational speed sensor 25 and the pulser 10 are fixed in relative position so that the point where 22.5°CA is passed from the output of the reference position signal from the nontooth portion 10a (X in Fig. 4) becomes substantially 90°CA after the TDC of the cylinder in the power stroke. Note further that 90°CA after the TDC indicates the timing of the peak engine rotational speed after the explosion in any cylinder in the case of a four-cylinder engine.

The diesel engine 6 shown in Fig. 1 is a four-cylinder engine. In each cylinder, a cylinder 33 and piston 34 form a main combustion chamber 35. To the main combustion chamber 35 is connected an auxiliary combustion chamber 36 provided with a glow plug 36a. Fuel injectors 4 are disposed in the auxiliary combustion chambers 36. Further, a compressor 39 of a turbocharger 38 is disposed in an intake pipe 37 of the diesel engine 6, while a turbine 41 is provided in the exhaust pipe 40. In the exhaust pipe 40 is also disposed a waist gate valve 42 for adjusting the supercharging pressure.

As for the detection system, use is made first of all of the rotational speed sensor 25 of the fuel injection pump 1 and provision is made of an accelerator sensor 51 comprised of a potentiometer for detecting the amount of depression of the accelerator pedal, an intake temperature sensor 52 for detecting the intake temperature, provided in the intake pipe 37 of the diesel engine 6, a supercharging pressure sensor 53 for detecting the supercharging pressure, provided in the intake port 37a communicating with the intake pipe 37, a water temperature sensor 54 for detecting the cooling water temperature, provided at the cylinder block 33a, and a reference position sensor 55 for detecting the reference crank position of the crankshaft.

The detection signals of the sensors are input to an electronic control unit 60 (below referred to simply as ECU). On the other hand, the ECU 60 drives the fuel shutoff valve 21, fuel spill valve 20, and timer control valve 23, and further controls the glow plug 36a.

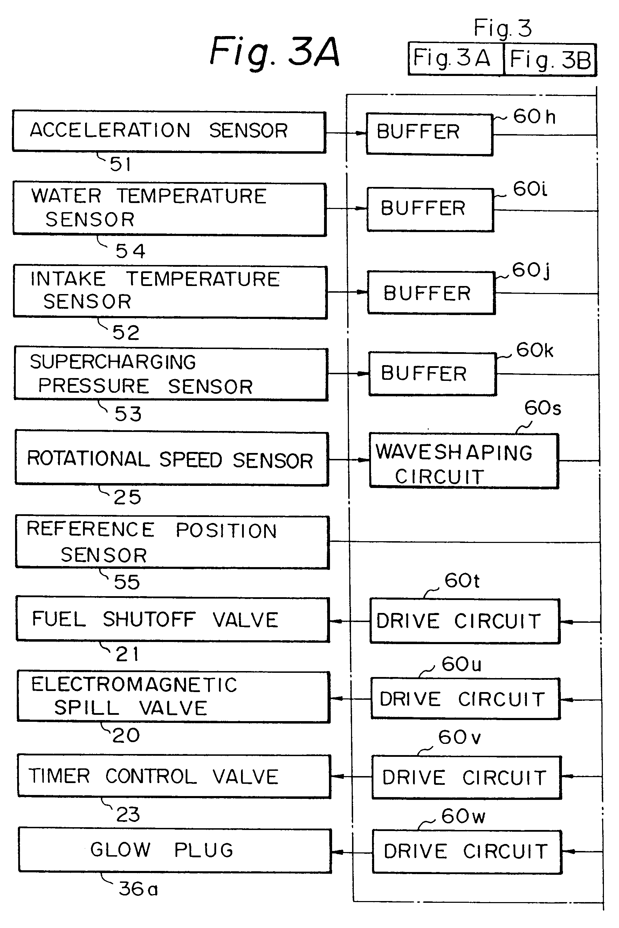

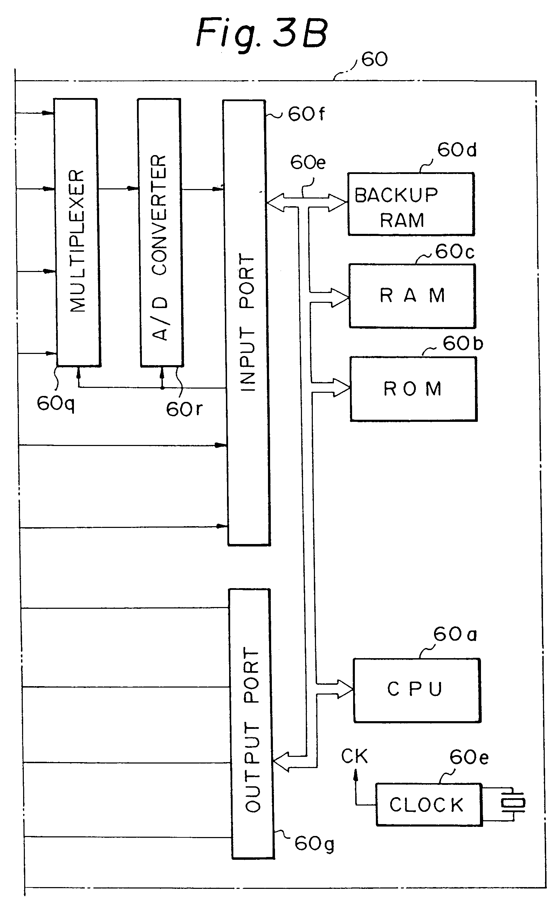

Next, the constitution of the ECU 60 will be explained based on Fig. 3.

To the ECU 60 are input and calculated the signals detected by the already mentioned sensors in accordance with a control program. The ECU 60 is constituted as a logical operation circuit made of a CPU 60a for performing processing for controlling the forementioned valves 20, 21, and 23 and glow plug 36a, ROM 60b in which are prestored a control program and initialization data, RAM 60c in which the various data input to the ECU 60 and data necessary for operation and control are stored temporarily, and backup RAM 60d which is backed up by a battery so as to store and hold the various data required for later control even when the key switch of the diesel engine 6 is turned off by the driver. The CPU 60a, ROM 60b, RAM 60c, and RAM 60d are connected to an input port 60f and an output port 60g through a common bus 60e.

Further, the ECU 60 is provided with buffers 60h, 60i, 60j, and 60k for the output signals from the aforementioned accelerator sensor 51, water temperature sensor 54, intake temperature sensor 52, and supercharging pressure sensor 53. Furthermore, provision is made of a multiplexer 60q for selectively outputting output signals of the sensors 51, 52, 53, 54, and 55 to the CPU 60a, an A/D converter 60r for converting analog signals to digital signals, and a waveshaping circuit 60s for shaping the waveforms of the output signal of the rotational speed sensor 25. The signals from these sensors and signals from the reference position sensor 55 are input through the input port 60f to the CPU 60a.

Moreover, the ECU 60 is provided with drive circuits 60t, 60u, 60v, and 60w for the previously mentioned fuel spill valve 20, fuel shutoff valve 21, timer control valve 23, and glow plug 36a, with the CPU 60a outputting control signals to the drive circuits 60t, 60u, 60v, and 60w through the output port 60g.

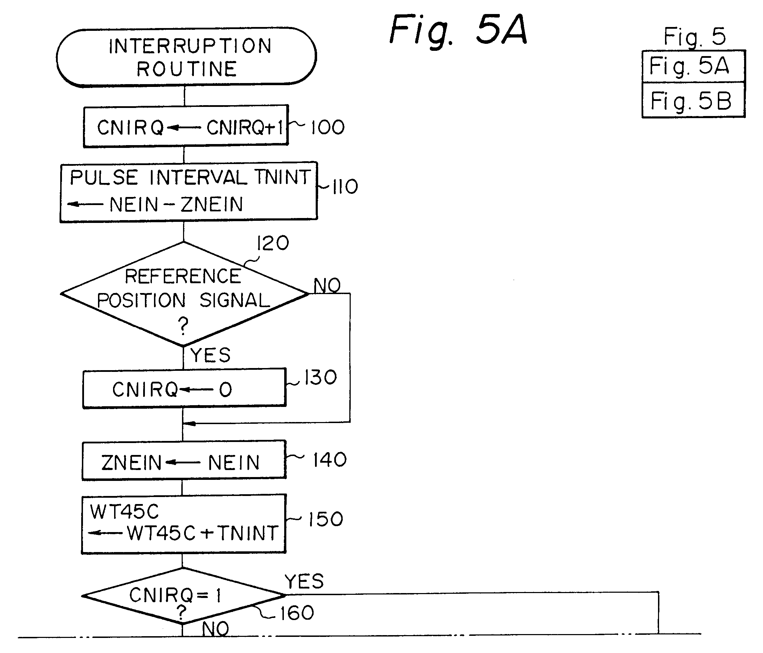

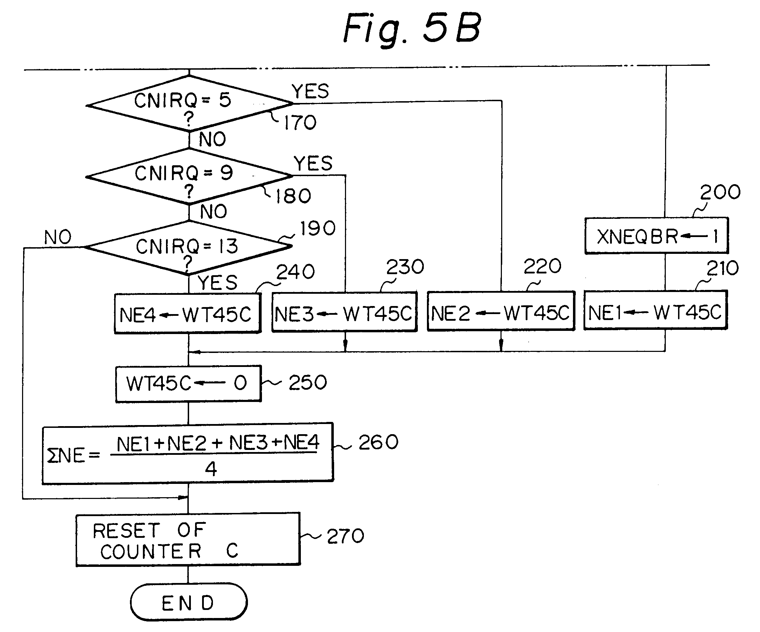

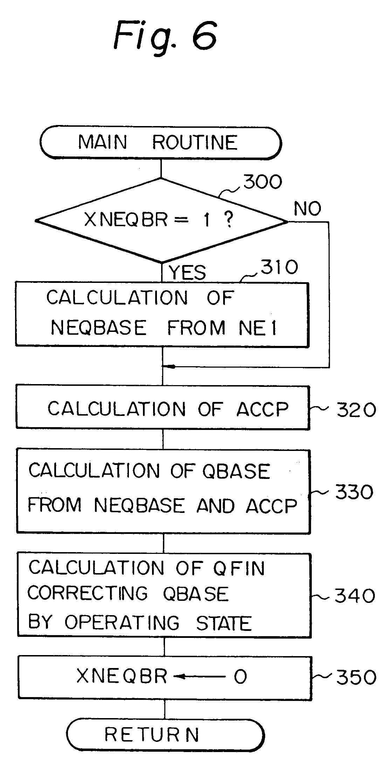

Next, an explanation will be given of the processing for control of the fuel injection amount executed by the ECU 60, based on the flow charts shown in Fig. 5 and Fig. 6.

The flow chart of Fig. 5 shows the interruption routine for interruption at the rising edge of the pulse signal of the rotational speed sensor 25.

When the processing starts, first, at step 100, the counter CNIRQ (initial value "0") showing the number of pulses from the output of the reference position signal is incremented by the value 1 and then, at step 110, the previous interruption time ZNEIN is subtracted from the current time (current interruption time) NEIN to calculate the pulse interval TNINT.

Next, at step 120, it is judged if the pulse signal causing the current interruption is a reference position signal or not. More specifically, it is judged if the pulse interval TNINT calculated at step 110 is 1.5 times or more the pulse interval TNINT previously calculated. If true, the pulse signal is judged to be a reference position signal, and the control flow proceeds to step 130, where the counter CNIRQ is cleared to the value "0". On the other hand, if false, i.e. the pulse signal is judged not to be a reference position signal, step 130 is skipped.

After this, at step 140, the current time (current interruption time) NEIN is stored as the previous interruption time ZNEIN and then, at step 150, the pulse interval TNINT calculated at step 110 is added to the cumulative time WT45C.

After the execution of step 150, at steps 160, 170, 180, and 190, it is judged if the counter CNIRQ showing the number of pulses representing the outputs of the reference position signal is the value "1", the value "5", the value "9", or the value "13", respectively. If it is judged at step 160 that CNIRQ is the value "1", the control proceeds to step 200, where the value 1 is substituted for the flag XNEQBR indicating that the number of pulses is one, then at step 210, the cumulative time WT45C calculated at step 150 is substituted for the first rotational speed NE1. Further, if it is judged at step 170 that CNIRQ is the value "5", then the control proceeds to step 220, where the cumulative time WT45C is substituted for the second rotational speed NE2. If it is judged at step 180 that CNIRQ is the value "9", then the control proceeds to step 230, where the cumulative time WT45C is substituted for the third rotational speed NE3. Further, if it is judged at step 190 that CNIRQ is the value "13", then the control proceeds to step 240, where the cumulative time WT45C is substituted for the fourth rotational speed NE4.

When any of steps 210 to 240 are executed, the control proceeds to step 250 and the cumulative time WT45C is cleared to the value "0" then at step 260 the mean value ΣNE of the first rotational speed NE1 to fourth rotational speed NE4 is calculated. Next, at step 270, the processing routine is ended.

On the other hand, when the judgement is negative at all of the steps 160, 170, 180, and 190, the processing routine is ended at step 270.

At step 270, the counter C counted up by the clock signals of the clock 60e shown in Fig. 3 is reset. When the counter C is reset, the counter C immediately once again starts counting upwards, i.e. immediately restarts the count up action each time the interruption routine of Fig. 5 is executed.

According to the above interruption routine, when the number of pulse signals CNIRQ is the value "1", "5", "9", or "13", the pulse interval WT45C for every 45°CA is calculated and is substituted for NE1, NE2, NE3, and NE4.

Next, in the flow chart of Fig. 6 the main routine of the fuel injection control processing, which is repeatedly executed, is shown.

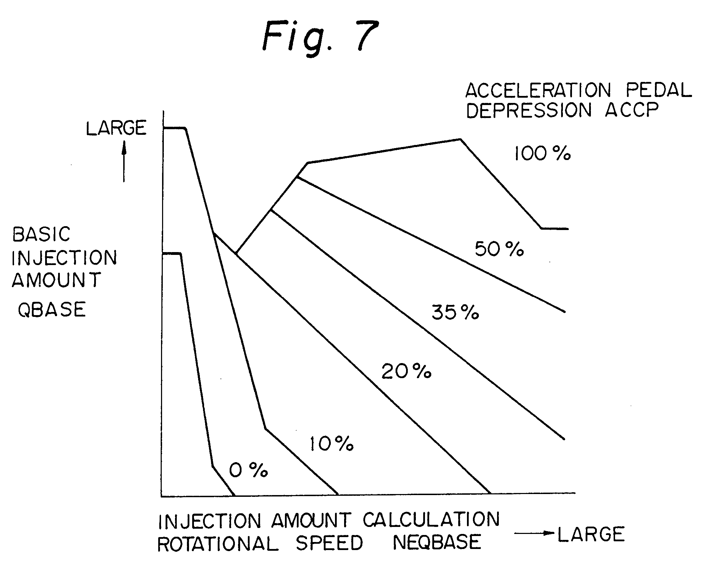

When the processing starts, first, at step 300, it is judged if a flag XNEQBR is the value "1". If true, i.e. the flag XNEQBR is the value "1", the dimension of the first rotational speed NE1 calculated by the interruption routine according to Fig.5 is time, and at step 310 the first rotational speed NE1 is converted to the dimension of the rotational speed (rpm) and stored as the injection amount calculation rotational speed NEQBASE. Next, at step 320, the amount of depression of the accelerator pedal ACCP is calculated from the results of detection of the acceleration sensor 51 and then, at step 330, the basic injection amount QBASE is calculated from the injection amount calculation rotational speed NEQBASE and the amount of depression of the accelerator pedal ACCP, based on the map as shown in Fig. 7, which is previously stored in the ROM 60b. Note that the injection amount calculation rotational speed NEQBASE calculated at step 310 is a slightly higher value than even the engine rotational speed used in the past when calculating the basic injection amount, so the map of Fig. 7 is set in advance to pattern considering a slighthly higher amount.

Next, at step 340, the basic injection amount QBASE is corrected based on operating conditions such as the intake temperature detected by the intake temperature sensor 52, the supercharging pressure detected from the supercharging sensor 53, and the cooling water temperature detected from the water temperature sensor 54, and the final injection amount QFIN is calculated. Next, at step 350, the the flag XNEQBR is cleared to the value "0". After this, the main routine is repeated.

On the other hand, if it is judged at step 300 that the flag XNEQBR is not the value "1", the processing skips step 310 and proceeds to step 320 so that the injection amount calculation rotational speed NEQBASE and the accelerator pedal depression ACCP calculated when the flag XNEQBR was the value "1" are used for calculation of the basic injection amount QBASE (steps 320 and 330) and the final injection amount QFIN (step 340).

In this way, in the main routine, the first rotational speed NE1 calculated in the interruption routine shown in Fig. 5 (rotational speed in 45°CA term about 90°CA after TDC) is used as the injection amount calculation rotational speed NEQBASE and the basic injection amount QBASE is calculated. That is, according to the method and the apparatus for a fuel injection control of this embodiment, the mean value of the rotational speed NEQBASE during the period of 45°CA about 90°CA after the substantial TDC of a four-cylinder diesel engine is used as the rotational speed of a power stroke and the rotational speed of the power stroke is used for calculation of the basic injection amount QBASE. Here, 90°CA after the TDC, as shown in Fig. 12, is the timing where the engine rotational speed peaks after the explosion of any cylinder in the case of a four-cylinder engine, so the basic injection amount QBASE is calculated based on the mean value of the engine rotational speed NEQBASE near the peak shown by the zone T2 in Fig. 12. That is, the injection amount of the no. 4 cylinder spoken of in the example shown in Fig. 12 is calculated based on the mean value of the engine rotational speed NEQBASE of the zone T2 in one power stroke before the power stroke of the no. 4 cylinder. Therefore, it is possible to secure excellent acceleration and deceleration operations.

Further, if the mean value of the engine rotational speed in the zone T1 in Fig. 12 is calculated, there is considerable deviation in the mean value of the engine rotational speed when the timing of occurrence of the peak value of the engine rotational speed and the timing of detection of the rotational speed are slightly deviated from each other. Near the peak value of the engine rotational speed, however, there is little fluctuation of the engine rotational speed, so if the mean value of the engine rotational speed is calculated in the zone T2, even with some deviation of the timing of occurrence of the peak value of the engine rotational speed and the timing of detection of the rotational speed, there is almost no change in the mean value of the engine rotational speed calculated. Therefore, if the mean value of the engine rotational speed is calculated in the zone T2, it becomes possible to detect with a good precision the actual engine rotational speed and, therefore, to make the injection amount match with a good precision the required injection amount, so it becomes possible to secure excellent acceleration and deceleration operations.

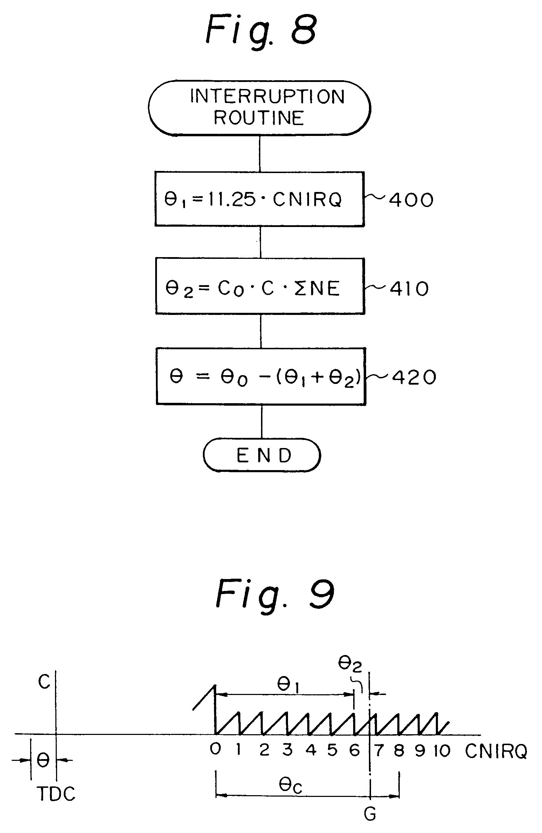

Fig. 8 to Fig. 11 explain the method of control of the fuel injection starting timing.

Fig. 8 shows the routine for finding the current injection starting timing $\theta$, being executed by interruption when a basic crank position signal is generated. Figure 9 shows the changes in the count of the counter C with the basic crank position signal indicated by G in Fig. 9.

Next, an explanation will be made of the routine shown in Fig. 8 referring to Fig. 9.

Referring to Fig. 8, first, at step 400, the crank angle $\theta_1$ is calculated using the count CNIRQ calculated in the interruption routine of Fig. 5 and the pulse interval 11.25°CA. Next, at step 410, the count C and the mean value of the engine rotational speed $\Sigma NE$ are used to complementary calculate the crank angle $\theta_2$. Here, $C_0$ is a constant. Therefore, $(\theta_1 + \theta_2)$ shows the relative position of the roller ring 14 based on the basic crank angle position G. That is, the smaller $(\theta_1 + \theta_2)$, the earlier the injection starting timing. Therefore, if the injection starting timing is $\theta$ before TDC, the injection starting timing $\theta$ is calculated by using the following equation in step 420.

$$\theta = \theta_0 - (\theta_1 + \theta_2)$$

Here, $\theta_0$ is a constant determined by the basic crank angle position G.

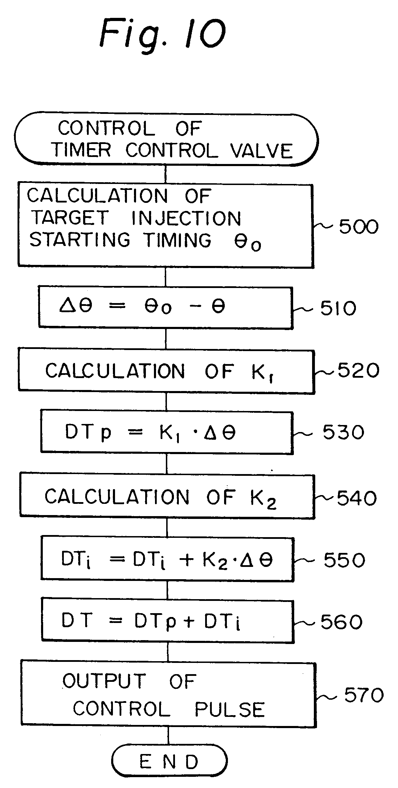

Figure 10 shows the control routine of the duty ratio DT of the control pulse supplied to the timer control valve 23, which is executed by the interruption at each set time.

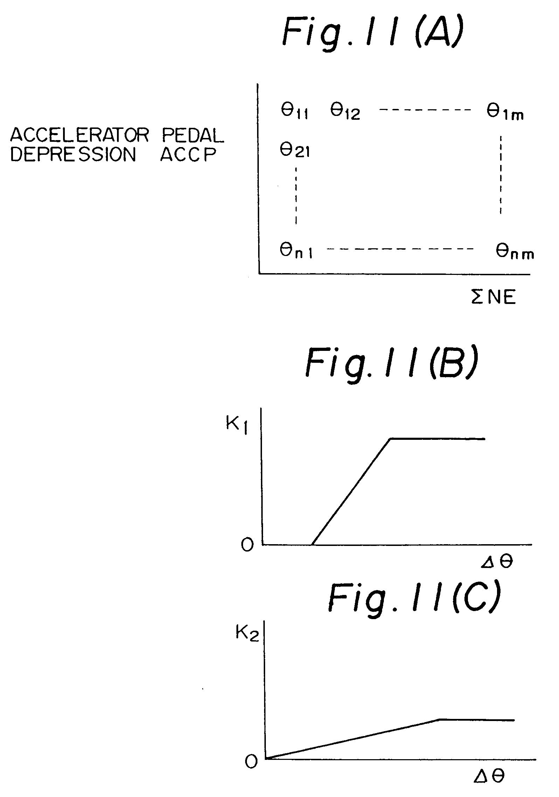

Referring to Fig. 10, at step 500, the target injection starting timing $\theta_0$ is calculated. This target injection starting timing $\theta_0$ is a function of the mean value $\Sigma NE$ of the engine rotational speed and the accelerator pedal depression amount. The map shown in Fig. 11 (A) is stored in the ROM 60b in advance. Next, at step 510, the difference $\Delta\theta$ between the target injection starting timing $\theta_0$ and the actual injection starting timing $\theta$, found by the routine of Fig. 8, is calculated. Next, at step 520, the coefficient $K_1$ is calculated from the function shown in Fig. 11(B), which is also stored in the ROM 60b, based on the difference $\Delta\theta$, then at step 530 the proportional term DTp (= $K_1 \cdot \Delta\theta$) of the duty ratio is calculated. Next, at step 540, the coefficient $K_2$ is calculated from the relationship shown in Fig. 11(C), stored in the ROM 60b, too, based on the difference $\Delta\theta$, and then, at step 550, the integration term $DT_i$ (= $DT_i + K_2 \cdot \Delta\theta$) of the duty ratio is calculated. Next, at step 560, the proportional term $DT_p$ and the integration term $DT_i$ are added, whereby the duty ratio DT is calculated, then at step 570, the control pulse of the duty ratio DT is output. Therefore, the timer control valve 23 is controlled by proportional integration so that the injection starting timing $\theta$ becomes the target injection starting timing $\theta_0$.

In the proportional integration control, the target injection starting timing $\theta_0$ is determined based on the mean value $\Sigma NE$ of the engine rotational speed. The reason is as follows: That is, the target injection starting timing $\theta_0$ may be also determined based on the afore-mentioned first rotational speed NE1 (Fig. 5) instead of $\Sigma NE$. However, the response of the injection timing control by the timer apparatus 13 is slow and therefore for example if the engine rotational speed rises and the target injection starting timing $\theta_0$ becomes earlier, the integration $DT_i$ of the duty ratio DT continues to increase. In this case, if NE1 is used as the mean value of the engine rotational speed, NE1 is higher than $\Sigma NE$, so the increase in the integration $DT_i$ of the duty ratio DT becomes larger. However, the larger the increase in the integration term $DT_i$, when the target injection starting timing $\theta_0$ is retarded, the duty ratio DT does not immediately fall and therefore there is the problem that the injection starting timing cannot be suitably controlled. Therefore, in the embodiment of the present invention, use is made of the mean rotational speed $\Sigma NE$, which is lower than the first rotational speed NE1, as the mean value of the engine rotational speed, so that the integration term $DT_i$ of the duty ratio DT does not become that large when the target injection starting timing $\theta_0$ becomes earlier. In this way, when the target injection starting timing $\theta_0$ is retarded, the duty ratio DT can be immediately reduced and therefore the injection start timing can be suitably controlled.

Above, an explanation was made of an embodiment of the present invention, but the present invention is not limited in any way to this embodiment. For example, the diesel engine may have six cylinders instead of four, the timing of the peak of the engine rotational speed after the explosion in any cylinder may be made 60° crank angle after the TDC instead of 90° crank angle after the TDC, etc.

## Claims

1. A method for a fuel injection control of a multi-cylinder internal combustion engine (6), wherein a mean value of an engine rotational speed is found and a basic injection amount of fuel is determined based on both said engine load and said mean value of an engine rotational speed, said basic injection amount being corrected by various engine operating parameters, and said mean value of the engine rotational speed being calculated from the engine rotational speed in a range of crank angle shorter than a power stroke of the engine (6) and about a crank angle of the peak engine rotational speed,

**characterized in that**

the rpm information used for the calculation of the basic injection amount of fuel of every cylinder is only the average rpm measured in a range shorter than a power stroke of a cylinder, about a crank angle of the peak engine rpm of that engine cylinder in which the previous injection operation was carried out.

2. A method for a fuel injection control as set forth in claim 1, characterized in that a pulse is generated by a pulse generating apparatus (10, 25) with every rotation of the engine (6) of a predetermined crank angle, and that the mean value of the engine rotational speed is found based on the pulses generated by said pulse generating apparatus (10, 25).

3. A method for a fuel injection control as set forth in claim 2, characterized in that said pulses generated from said pulse generating apparatus (10, 25) are comprised of reference pulses and succeeding pulses continuing from said reference pulses, that said reference pulses and succeeding pulses are generated at the same timing across the crank angle range of (720° crank angle)/(number of cylinders) for each cylinder, and that said mean value of the engine rotational speed is found from said reference pulses and part of said succeeding pulses.

4. A method for a fuel injection control as set forth in claim 3, characterized in that a pulser (10) rotates at half of the rotational speed of the engine (6), that a rotational speed sensor (25) is disposed facing the outer circumferential face of said pulser, that a plurality of teeth are formed at equiangular intervals on the outer circumference of the pulser, that nontooth portions (10a) are formed at each angle of 360°/number of cylinders, and that said pulser (10) and said rotational speed sensor (25) are comprised by said pulse generating apparatus (10, 25).

5. A method for a fuel injection control apparatus as set forth in claim 3, characterized in that said mean value of the engine rotational speed in said crank angle range of (720° crank angle/number of cylinders) is found from said reference pulses and all succeeding pulses.

6. A method for a fuel injection control as set forth in claim 1, characterized in that said method is used in said internal combustion engine (6) being a four-cylinder engine, that the crank angle of the peak engine rotational speed is about 90° after the TDC of the power stroke, and that the crank angle range is 45°.

7. An apparatus for a fuel injection control of a multi-cylinder internal combustion engine (6), comprising means (10, 25, 55, 60) for finding a mean value of an engine rotational speed, determining means (60) for determining a basic injection amount of fuel based on both said engine load and said mean value of an engine rotational speed, correcting means (60) for correcting said basic injection amount by various engine operating parameters, and calculation means (60) for calculating said mean value of the engine rotational speed from the engine rotational speed in a range of crank angle shorter than a power stroke of the engine (6) and about a crank angle of the peak engine rotational speed,

**characterized in that**

said determining means (60) uses the rpm information for the calculation of the basic injection amount of fuel of every cylinder which is only the average rpm measured in a range shorter than a power stroke of a cylinder, about a crank angle of the peak engine rpm of that engine cylinder in which the previous injection operation was carried out.

8. An apparatus for a fuel injection control as set forth in claim 7, characterized in that a fuel injection pump (1) is provided comprising a drive shaft (8) driven at a rotational speed half that of the engine (6), a plunger (12) for fuel pressurization which can rotate together with the drive shaft (8) and move in the axial direction, a cam plate (11) fixed to the plunger (12), a roller ring (14) which is disposed rotatably about said drive shaft (8) and engages with the cam face (11a) of said cam plate (11) to move said plunger (12) in the axial direction, and a timer apparatus (13) which controls the rotation of said roller ring (14), said pulser (10) being fixed to said drive shaft (8) and said rotational speed sensor (25) being fixed to said roller ring (14).

9. An apparatus for a fuel injection control as set forth in claim 7, characterized in that a fuel injection pump (1) is provided comprising a drive shaft (8) driven at a rotational speed half that of the engine (6), a plunger (12) for fuel pressurization which can rotate together with said drive shaft (8) and move in the axial direction, a cam plate (11) fixed to said plunger (12), a roller ring (14) which is disposed rotatably about said drive shaft (8) and engages with the cam face (11a) of said cam plate (11) to move said plunger (12) in the axial direction, and a timer apparatus (13) which controls the rotation of said roller ring (14), said timer apparatus (13) being controlled by control pulses which change in duty ratio, and said duty ratio being controlled based on said mean value of the engine rotational speed in said crank angle of (720° crank angle)/(number of cylinders).

**Patentansprüche**

1. Verfahren zur Brennstoffeinspritzregelung für eine Mehrzylinder-Brennkraftmaschine (6), bei dem ein Mittelwert einer Maschinendrehzahl ermittelt wird und aufgrund des Mittelwertes der Maschinendrehzahl sowie einer Maschinenbelastung eine Grundeinspritzmenge an Brennstoff bestimmt wird, wobei die Grundeinspritzmenge durch verschiedenerlei Maschinenbetriebsparameter korrigiert wird und der Mittelwert der Maschinendrehzahl aus der Maschinendrehzahl in einem Kurbelwinkelbereich berechnet wird, der kürzer als ein Arbeitstakt der Maschine (6) ist und um einen Kurbelwinkel der Spitzen-Maschinendrehzahl herum liegt,
dadurch gekennzeichnet, daß
die für das Berechnen der Grundeinspritzmenge an Brennstoff für einen jeweiligen Zylinder herangezogene Drehzahlinformation nur die mittlere Drehzahl ist, die in einem Bereich gemessen wird, der kürzer als ein Arbeitstakt eines Zylinders ist und der um einen Kurbelwinkel der Spitzen-Maschinendrehzahl desjenigen Maschinenzylinders herum liegt, an welchem der vorangehende Einspritzvorgang ausgeführt wurde.

2. Verfahren zur Brennstoffeinspritzregelung gemäß Anspruch 1, dadurch gekennzeichnet, daß durch eine Impulsgeneratorvorrichtung (10, 25) bei jeder Drehung der Maschine (6) um einen vorbestimmten Kurbelwinkel ein Impuls erzeugt wird und daß der Mittelwert der Maschinendrehzahl aufgrund der von der Impulsgeneratorvorrichtung (10, 25) erzeugten Impulse ermittelt wird.

3. Verfahren zur Brennstoffeinspritzregelung nach Anspruch 2, dadurch gekennzeichnet, daß die von der Impulsgeneratorvorrichtung (10, 25) erzeugten Impulse Bezugsimpulse und von den Bezugsimpulsen an fortgesetzte Folgeimpulse umfassen, daß die Bezugsimpulse und die Folgeimpulse für jeden Zylinder unter gleicher Zeitsteuerung über den Kurbelwinkelbereich von 720° Kurbelwinkel/ Zylinderanzahl erzeugt werden und daß der Mittelwert der Maschinendrehzahl aus den Bezugsimpulsen und einem Teil der Folgeimpulse ermittelt wird.

4. Verfahren zur Brennstoffeinspritzregelung nach Anspruch 3, dadurch gekennzeichnet, daß ein Impulsgeber (10) mit der halben Drehzahl der Maschine (6) dreht, daß der Außenumfangsfläche des Impulsgebers ein Drehzahlsensor (25) gegenübergesetzt ist, daß an dem Außenumfang des Impulsgebers in gleichen Winkelabständen eine Vielzahl von Zähnen ausgebildet ist, daß bei jedem Winkel von 360°/ Zylinderanzahl Zahnlückenabschnitte (10a) gebildet sind und daß die Impulsgeneratorvorrichtung (10, 25) den Impulsgeber (10) und den Drehzahlsensor (25) enthält.

5. Verfahren zur Brennstoffeinspritzregelung nach Anspruch 3, dadurch gekennzeichnet, daß der Mittelwert der Maschinendrehzahl im Kurbelwinkelbereich von 720° Kurbelwinkel/Zylinderanzahl aus den Bezugsimpulsen und allen Folgeimpulsen ermittelt wird.

6. Verfahren zur Brennstoffeinspritzregelung nach Anspruch 1, dadurch gekennzeichnet, daß das Verfahren bei einer Brennkraftmaschine (6) angewandt wird, die eine Vierzylindermaschine ist, daß der Kurbelwinkel für die Spitzen-Maschinendrehzahl bei ungefähr 90° nach dem oberen Totpunkt des Arbeitstaktes liegt und daß der Kurbelwinkelbereich 45° umfaßt.

7. Einrichtung zur Brennstoffeinspritzregelung für eine Mehrzylinder-Brennkraftmaschine (6), mit einer Einrichtung (10, 25, 55, 60) zum Ermitteln eines Mittelwertes einer Maschinendrehzahl, einer Bestimmungseinrichtung (60) zum Bestimmen einer Grundeinspritzmenge an Brennstoff aufgrund der Maschinenbelastung und des Mittelwertes der Maschinendrehzahl, einer Korrektureinrichtung (60) zum Korrigieren der Grundeinspritzmenge durch verschiedenerlei Maschinenbetriebsparameter und einer Recheneinrichtung (60) zum Berechnen des Mittelwertes der Maschinendrehzahl aus der Maschinendrehzahl in einem Kurbelwinkelbereich, der kürzer als ein Arbeitstakt der Maschine (6) ist und um einen Kurbelwinkel der Spitzen-Maschinendrehzahl herum liegt,
dadurch gekennzeichnet, daß
die Bestimmungseinrichtung (60) für das Berechnen der Grundeinspritzmenge an Brennstoff für einen jeweiligen Zylinder die Drehzahlinformation einsetzt, die nur die mittlere Drehzahl ist, welche in einem Bereich gemessen wird, der kürzer als ein Arbeitstakt eines Zylinders ist und um einen Kurbelwinkel der Spitzen-Maschinendrehzahl desjenigen Maschinenzylinders herum liegt, an welchem der vorangehende Einspritzvorgang ausgeführt wurde.

8. Einrichtung zur Brennstoffeinspritzregelung nach Anspruch 7, dadurch gekennzeichnet, daß eine Brennstoffeinspritzpumpe (1) vorgesehen ist, die eine mit der halben Drehzahl der Maschine (6) angetriebene Antriebswelle (8), für die Druckbeaufschlagung des Brennstoffs einen Druckkolben (12), der zusammen mit der Antriebswelle (8) drehbar und in der axialen Richtung bewegbar ist, eine an dem Druckkolben (12) befestigte Nockenplatte (11), einen Rollenring (14), der um die Antriebswelle (8) drehbar angeordnet ist und mit der Nockenfläche (11a) der Nockenplatte (11) in Eingriff steht, um den Druckkolben (12) in der axialen Richtung zu bewegen, und eine Zeitsteuervorrichtung (13) aufweist, die die Drehung des Rollenringes (14) steuert, wobei an der Antriebswelle (8) ein Impulsgeber (10) befestigt ist und an dem Rollenring (14) ein Drehzahlsensor (25) befestigt ist.

9. Einrichtung zur Brennstoffeinspritzregelung nach Anspruch 7, dadurch gekennzeichnet, daß eine Brennstoffeinspritzpumpe (1) vorgesehen ist, die eine mit der halben Drehzahl der Maschine (6) angetriebene Antriebswelle (8), für die Druckbeaufschlagung des Brennstoffs einen Druckkolben (12), der zusammen mit der Antriebswelle (8) drehbar und in der axialen Richtung bewegbar ist, eine an dem Druckkolben (12) befestigte Nockenplatte (11), einen Rollenring (14), der um die Antriebswelle (8) drehbar angeordnet ist und mit der Nockenfläche (11a) der Nockenplatte (11) in Eingriff steht, um den Druckkolben (12) in der axialen Richtung zu bewegen, und eine Zeitsteuervorrichtung (13) aufweist, die die Drehung des Rollenringes (14) steuert, wobei die Zeitsteuervorrichtung (13) durch Steuerimpulse mit veränderbarem Einschaltverhältnis gesteuert ist und das Einschaltverhältnis gemäß dem Mittelwert der Maschinendrehzahl in einem Kurbelwinkelbereich von 220° Kurbelwinkel/Zylinderanzahl gesteuert ist.

**Revendications**

1. Un procédé de commande de l'injection de carburant d'un moteur à combustion interne multicylindrique (6), dans lequel on trouve une valeur moyenne de la vitesse de rotation du moteur et on détermine une quantité de carburant d'injection de base à partir à la fois de ladite charge du moteur et de ladite valeur moyenne de la vitesse de rotation du moteur, ladite quantité d'injection de base étant corrigée par différents paramètres de fonctionnement du moteur, et ladite valeur moyenne de la vitesse de rotation du moteur étant calculée à partir de la vitesse de rotation du moteur dans une zone d'angle de vilebrequin plus restreinte qu'une course motrice du moteur (6) et au voisinage d'un angle de vilebrequin correspondant à la vitesse maximale de rotation du moteur, caractérisé en ce que l'information concernant la vitesse de rotation du moteur utilisée pour le calcul de la quantité de carburant d'injection de base de chaque cylindre est constitué uniquement par la vitesse de rotation moyenne mesurée dans une zone plus restreinte qu'une course motrice d'un cylindre, au voisinage d'un angle de vilebrequin correspondant à la vitesse maximale de rotation du moteur dudit cylindre du moteur dans lequel la précédente opération d'injection a été réalisée.

2. Un procédé de commande de l'injection de carburant selon la revendication 1, caractérisé en ce qu'une impulsion est émise par un appareil générateur d'impulsions (10, 25) à chaque rotation du moteur (6) d'un angle de vilebrequin prédéterminé, et en ce que l'on trouve la valeur moyenne de la vitesse de rotation du moteur sur la base des impulsions émises par ledit appareil générateur d'impulsions.

3. Un procédé de commande de l'injection de carburant selon la revendication 2, caractérisé en ce que lesdites impulsions émises par ledit appareil générateur d'impulsions (10, 25) sont constituées par des impulsions de référence et des impulsions en aval dans le temps, émises à la suite desdites impulsions de référence, en ce que lesdites impulsions de référence et lesdites impulsions en aval dans le temps sont émises au même instant dans le temps sur la zone d'angle de rotation du vilebrequin de (720° d'angle de vilebrequin/le nombre de cylindres) pour chaque cylindre, et en ce que l'on trouve ladite valeur moyenne de la vitesse de rotation du moteur à partir desdites impulsions de référence et d'une partie desdites impulsions en aval dans le temps.

4. Un procédé pour la commande de l'injection de carburant selon la revendication 3, caractérisé en ce qu'un organe de génération d'impulsions (10) tourne à une vitesse égale à la moitié de la vitesse de rotation du moteur (6), en ce qu'un capteur de vitesse de rotation (25) est disposé en face de la surface circonférentielle extérieure dudit organe de génération d'impulsions, en ce qu'une pluralité de dents sont formées à des intervalles équiangulaires sur la circonférence extérieure de l'organe de génération d'impulsions, en ce que des parties non pourvues de dents (10a) sont formés sur chaque angle de 360 degrés/le nombre de cylindres, et en ce que ledit organe de génération d'impulsions (10) et ledit capteur de vitesse de rotation (25) sont compris dans ledit appareil de fourniture d'impulsions (10, 25).

5. Un procédé pour un appareil de commande de l'injection de carburant selon la revendication 3, caractérisé en ce que l'on trouve ladite valeur moyenne de la valeur de rotation du moteur dans ladite zone d'angle de vilebrequin de (720° d'angle de vilebrequin/le nombre de cylindres) à partir desdites impulsions de référence et de toutes les impulsions en aval dans le temps.

6. Un procédé de commande de l'injection de carburant selon la revendication 1, caractérisé en ce que ledit procédé est utilisé dans ledit moteur à combustion interne (6) qui est constitué par un moteur à quatre cylindres, en ce que l'angle de vilebrequin pour la vitesse de rotation maximale du moteur est d'environ 90 degrés après le point mort haut de la course motrice, et en ce que la zone de l'angle de vilebrequin est de 45 degrés

7. Un appareil pour la commande de l'injection de carburant d'un moteur à combustion interne multicylindrique (6) comprenant des moyens (10, 25, 55, 60) pour trouver une valeur moyenne de la vitesse de rotation du moteur, des moyens de détermination (60) pour déterminer la quantité de de carburant d'injection de base à partir, à la fois, de ladite charge moteur et de ladite valeur moyenne de la vitesse de rotation du moteur, des moyens de correction (60) pour faire corriger ladite quantité d'injection de base par différents paramètres de fonctionnement du moteur, et des moyens de calcul (60) pour calculer ladite valeur moyenne de la vitesse de rotation du moteur à partir de la vitesse de rotation du moteur dans une zone d'angle de vilebrequin plus restreinte qu'une course motrice du moteur (6) et au voisinage d'un angle de vilebrequin correspondant à la vitesse maximale de rotation du moteur, caractérisé en ce que lesdits moyens de détermination (60) utilisent l'information de vitesse de rotation pour le calcul de la quantité de carburant d'injection de base de chaque cylindre qui est seulement la vitesse de rotation moyenne mesurée sur une zone plus restreinte qu'une course motrice d'un cylindre, au voisinage d'un angle de vilebrequin correspondant à la vitesse de rotation maximale du moteur pour le cylindre du moteur dans lequel la précédente opération d'injection a été réalisée.

8. Un appareil pour la commande de l'injection de carburant, selon la revendication 7, caractérisé en ce qu'une pompe d'injection de carburant (1) est prévue, comprenant un arbre d'entraînement (8) entraîné à une vitesse de rotation égale à la moitié de celle du moteur (6), un piston plongeur (12) pour réaliser la pressurisation du carburant et qui peut tourner avec l'arbre d'entraînement (8) et se déplacer dans la direction axiale, un plateau de came (11) fixé au piston plongeur (12), une bague de rouleau (14) qui est disposée rotative autour dudit arbre d'entraînement (8) et qui vient en contact avec la face de came (11a) dudit plateau de came (11) pour déplacer ledit piston plongeur (12) dans la direction axiale, et un appareil de synchronisation (13) qui commande la rotation de ladite bague de rouleau (14), ledit organe générateur (10) étant fixé audit arbre d'entraînement (8) et ledit capteur de vitesse de rotation (25) étant fixé à ladite bague de rouleau (14).

9. Un appareil pour la commande de l'injection de carburant selon la revendication 7, caractérisé en ce qu'il comporte une pompe d'injection de carburant (1) comprenant un arbre d'entraînement (8) entraîné à une vitesse de rotation égale à la moitié de celle du moteur (6), un piston plongeur (12) pour réaliser la pressurisation du carburant et qui peut tourner avec ledit arbre d'entraînement (8) et se déplacer dans la direction axiale, un plateau de came (11) fixé audit piston plongeur (12), une bague de rouleau (14) qui est disposée rotative autour dudit arbre d'entraînement (8) et qui vient en contact avec la face de came (11a) dudit plateau de came (11) afin de déplacer ledit piston plongeur (12) dans la direction axiale, et un appareil de synchronisation (13) qui commande la rotation de ladite bague de rouleau (14), ledit appareil de synchronisation (13) étant commandé par des impulsions de commande qui varient en fonction du rapport de charge, et ledit rapport de charge étant contrôlé sur la base de ladite valeur moyenne de la vitesse de rotation du moteur sur ledit angle de vilebrequin de (720° d'angle de vilebrequin/le nombre de cylindres).

Fig. 1

EP 0 412 506 B1

# Fig. 2

# Fig. 3A

| ACCELERATION SENSOR | → | BUFFER | ~60h |
| 51 | | | |
| WATER TEMPERATURE SENSOR | → | BUFFER | 60i |
| 54 | | | |
| INTAKE TEMPERATURE SENSOR | → | BUFFER | 60j |
| 52 | | | |
| SUPERCHARGING PRESSURE SENSOR | → | BUFFER | 60k |
| 53 | | | |
| ROTATIONAL SPEED SENSOR | | WAVESHAPING CIRCUIT | 60s |
| 25 | | | |
| REFERENCE POSITION SENSOR | | | |
| 55 | | | |
| FUEL SHUTOFF VALVE | ← | DRIVE CIRCUIT | 60t |
| 21 | | | |
| ELECTROMAGNETIC SPILL VALVE | ← | DRIVE CIRCUIT | 60u |
| 20 | | | |
| TIMER CONTROL VALVE | ← | DRIVE CIRCUIT | 60v |
| 23 | | | |
| GLOW PLUG | ← | DRIVE CIRCUIT | 60w |
| 36a | | | |

# Fig. 3B

Fig. 4

Fig. 5

| Fig. 5A |
|---------|
| Fig. 5B |

Fig. 5A

INTERRUPTION ROUTINE

CNIRQ ← CNIRQ+1 ~100

PULSE INTERVAL TNINT ← NEIN − ZNEIN ~110

120 REFERENCE POSITION SIGNAL ? — NO / YES

CNIRQ ← O ~130

ZNEIN ← NEIN ~140

WT45C ← WT45C+TNINT ~150

CNIRQ = 1 ? ~160 — YES / NO

# Fig. 5B

CNIRQ = 5 ? — YES ⌐170
NO

CNIRQ = 9 ? — YES ⌐180
NO

⌐190
NO — CNIRQ = 13 ? — YES

200
XNEQBR ← 1

240    230    220    210
NE4 ← WT45C    NE3 ← WT45C    NE2 ← WT45C    NE1 ← WT45C

WT45C ← 0 ~ 250

$$\Sigma NE = \frac{NE1 + NE2 + NE3 + NE4}{4}$$ ~ 260

RESET OF COUNTER C ~ 270

END

EP 0 412 506 B1

# Fig. 6

```
        ( MAIN  ROUTINE )
                |
             /     \        ~300
           / XNEQBR = 1 ? \ ----NO----
           \             /           |
             \     /                 |
              YES    ~310            |
        +------------------+         |
        | CALCULATION  OF  |         |
        | NEQBASE  FROM NE1|         |
        +------------------+         |
                |                    |
                |<-------------------+
        +------------------+
        | CALCULATION OF ACCP |  ~ 320
        +------------------+
                |
        +------------------+
        | CALCULATION OF QBASE |
        | FROM NEQBASE AND ACCP|  ~ 330
        +------------------+
                |
        +------------------+
        | CALCULATION OF QFIN |
        | CORRECTING QBASE    |  ~ 340
        | BY OPERATING STATE  |
        +------------------+
                |
        +------------------+
        | XNEQBR <--- 0    |  ~ 350
        +------------------+
                |
           ( RETURN )
```

# Fig. 7

ACCELERATION PEDAL
DEPRESSION ACCP

LARGE

BASIC
INJECTION
AMOUNT

QBASE

100 %

50 %

35 %

20 %

10 %

0 %

INJECTION AMOUNT CALCULATION
ROTATIONAL SPEED   NEQBASE ⟶ LARGE

EP 0 412 506 B1

EP 0 412 506 B1

# Fig. 8

INTERRUPTION
ROUTINE

$\theta_1 = 11.25 \cdot CNIRQ$ ~400

$\theta_2 = C_0 \cdot C \cdot \Sigma NE$ ~410

$\theta = \theta_0 - (\theta_1 + \theta_2)$ ~420

END

# Fig. 9

21

# Fig. 10

```
      ╭─────────────────────────╮
      │      CONTROL  OF         │
      │  TIMER  CONTROL  VALVE   │
      ╰─────────────────────────╯
                  │
  ┌─────────────────────────────┐
  │  CALCULATION  OF            │
  │  TARGET  INJECTION          │~ 500
  │  STARTING  TIMING  θ₀       │
  └─────────────────────────────┘
                  │
    ┌───────────────────────┐
    │   Δθ  =  θ₀  - θ       │~ 510
    └───────────────────────┘
                  │
  ┌─────────────────────────────┐
  │  CALCULATION  OF  K₁        │~520
  └─────────────────────────────┘
                  │
    ┌───────────────────────┐
    │   DTp  =  K₁ · Δθ      │~ 530
    └───────────────────────┘
                  │
  ┌─────────────────────────────┐
  │  CALCULATION  OF  K₂        │~540
  └─────────────────────────────┘
                  │
    ┌───────────────────────┐
    │  DTi  = DTi + K₂·Δθ    │~ 550
    └───────────────────────┘
                  │
    ┌───────────────────────┐
    │  DT  = DTp + DTi       │~ 560
    └───────────────────────┘
                  │
  ┌─────────────────────────────┐
  │     OUTPUT  OF              │~ 570
  │     CONTROL  PULSE          │
  └─────────────────────────────┘
                  │
           ╭─────────────╮
           │   E N D     │
           ╰─────────────╯
```

## Fig. 11 (A)

ACCELERATOR PEDAL
DEPRESSION ACCP

$\Theta_{11}$  $\Theta_{12}$ — — — — — $\Theta_{1m}$

$\Theta_{21}$

$\Theta_{n1}$ — — — — — $\Theta_{nm}$

$\Sigma NE$

## Fig. 11 (B)

$K_1$

$O$

$\Delta\Theta$

## Fig. 11 (C)

$K_2$

$O$

$\Delta\Theta$

# Fig. 12

POWER STROKE

NO.1
CYLINDER

NO.3
CYLINDER

NO.4
CYLINDER

FUEL
INJECTION

NO. 2
CYLINDER

θ

$T_1$  $T_2$

ENGINE
SPEED

$N_1$

$N_2$

CRANK
ANGLE

0          180°CA          360°CA          540°CA